# EUROPÄISCHE PATENTANMELDUNG

(11) **EP 0 671 831 A1**
(43) Veröffentlichungstag der Anmeldung: **13.09.1995**
(21) Anmeldenummer: 95810135.4
(22) Anmeldetag: 02.03.1995
(51) Int. Cl.: H04L 12/12, H04L 13/08

(54) **Einrichtung zum Empfang von Daten**

(30) Priorität: 07.03.1994 CH 668/94
(71) Anmelder: MARTIGNONI ELECTRONICS AG, CH-8005 Zürich (CH)
(72) Erfinder: Martignoni, Thomas, CH-8005 Zürich (CH)
(74) Vertreter: Patentanwälte Schaad, Balass & Partner AG

(57) **Zusammenfassung**

Ueber eine Datenfernleitung (3) gelieferte Daten werden über eine Datenempfangseinrichtung (1) an ein zugeordnetes Endgerät, wie z.B. ein Datenverarbeitungsgerät (6) oder Datenwiedergabegerät (8), weitergeleitet. Zur Ermöglichung des Datenempfangs bei ausgeschaltetem Endgerät ist eine Steuer- und Überwachungseinrichtung (4) vorhanden ist, welche das Eingehen von Daten überwacht und bei Dateneingang ein Steuersignal ausgibt, welches das Endgerät (6, 8) in Betriebsbereitschaft versetzt.

## Beschreibung

Die vorliegende Erfindung betrifft
eine Einrichtung zum Empfang von Daten, welche über eine Datenfernleitung geliefert werden und an ein zugeordnetes Endgerät, beispielsweise ein Datenverarbeitungs- oder Wiedergabegerät weitergeleitet werden sollen.

Derartige Einrichtungen werden insbesondere verwendet, um Informationen von einer entfernten Informationsquelle zu empfangen und an einen Personalcomputer weiterzuleiten.

Dort werden die empfangenen Daten gespeichert und können weiterverarbeitet oder lediglich, beispielsweise auf einem Drucker, ausgegeben werden.

Das Problem besteht nun darin, daß der Empfang und die Weiterleitung von über die Datenfernleitung übermittelten Daten nur möglich ist, wenn der Personalcomputer eingeschaltet ist und sich in einem entsprechenden Empfangsmodus befindet. Dies bedeutet, daß ein Empfang beispielsweise dann nicht möglich ist, wenn sich der Personalcomputer in einem anderen Modus befindet, beispielsweise in einem Arbeitsmodus oder wenn der Personalcomputer zum Einsparen von Energie und zur Schonung des Gerätes ausgeschaltet ist.

Der Erfindung liegt daher die Aufgabe zugrunde, eine Empfangseinrichtung der eingangs genannten Art anzugeben, welche diese Nachteile nicht aufweist.

Dies wird erfindungsgemäß dadurch gelöst, daß eine Steuer- und Überwachungseinrichtung vorhanden ist, welche das Eingehen von Daten überwacht und bei Dateneingang ein Steuersignal ausgibt, welches das zugeordnete Endgerät in Betriebsbereitschaft versetzt.

Durch diese Ausgestaltung kann das Endgerät, beispielsweise der Personalcomputer bei Nichtbenutzung ausgeschaltet sein und dennoch bei Eingang von Daten über die Datenfernleitung Daten empfangen. Sobald Daten eingehen wird das Endgerät über die Steuer- und Überwachungseinrichtung eingeschaltet und anschließend dem Endgerät die empfangenen Daten übermittelt.

Bevorzugt ist hierbei eine Speichereinheit vorgesehen, in welcher die empfangenen Daten mindest solange gespeichert werden, wie der Einschaltvorgang des Endgerätes dauert. Hierdurch wird sichergestellt, daß während des Einschaltvorganges, während dem noch keine Betriebsbereitschaft des Endgerätes gegeben ist, empfangene Daten nicht verlorengehen. Die Daten können dabei zunächst komplett in den Speicher eingelesen werden und nach vollendeter Betriebsbereitschaft aus dem Speicher wieder ausgelesen und an das Endgerät übermittelt werden. Der Speicher kann aber auch als Pufferspeicher ausgebildet sein, dessen Daten ausgelesen werden, sobald die vollständige Betriebsbereitschaft des Endgerätes gegeben ist.

Nach einer Ausgestaltung der Erfindung wird durch das von der Steuer- und Überwachungseinrichtung abgegebene Steuersignal bei Datenempfang die Energieversorgung des Endgerätes eingeschaltet, insbesondere wird eine zur Speisung des Endgerätes dienende Steckdose an das Netz geschaltet. Diese Ausgestaltung ist besonders einfach und hat zudem den Vorteil, daß vorhandene Endgeräte ohne Änderungen verwendbar sind.

Nach einer weiteren Ausgestaltung der Erfindung ist eine Einrichtung zur Erkennung der Art der empfangenen Daten vorhanden. Entsprechend der Datenart können nach einer ersten Ausgestaltung der Erfindung die Daten an ein entsprechendes Endgerät weitergeleitet werden, welches an die empfangene Datenart angepaßt ist. Nach einer zweiten Ausgestaltung der Erfindung werden die empfangenen Daten entsprechend ihrer Art konvertiert, um stets Daten zu erhalten, die ihrer Art nach an ein bestimmtes vorhandenes Endgerät angepaßt sind.

Durch die zweite Ausgestaltung können Daten verschiedener Art über dieselbe Einrichtung empfangen werden und an verschiedene Endgeräte, beispielsweise Personalcomputer, Drucker oder Lautsprecher, weitergeleitet werden, je nach dem von welcher Art die empfangenen Daten sind. Es können also Faxsignale empfangen und an ein Faxgerät weitergeleitet werden, während empfangene Computersignale an einen Personalcomputer weitergeleitet werden. Oder aber es können Faxsignale, Signale eines anderen Personalcomputers oder sonstige Signale empfangen und nach entsprechender Konvertierung stets beispielsweise an einen Personalcomputer weitergeleitet werden.

Nach einer weiteren Ausgestaltung der Erfindung dient die Empfangseinrichtung gleichzeitig zum Aussenden von Daten über die Datenfernleitung. Diese Ausgestaltung hat den Vorteil, daß verschiedene Teile der Einrichtung wie Datenleitungen sowohl zum Empfangen als auch zum Aussenden verwendet werden können.

Als Endgerät dient bevorzugt ein Drucker, welcher insbesondere gleichzeitig als Drucker für einen Personalcomputer verwendet wird. Bei Nichtbetrieb des Personalcomputers kann der Drucker vorteilhafterweise ausgeschaltet sein. Bei Eingehen von Daten über die Datenfernleitung wird der Drucker durch die Steuer- und Überwachungseinrichtung eingeschaltet und erhält bei vollständiger Betriebsbereitschaft die eingehenden Daten übermittelt. Die Daten werden vom Drucker ausgegeben und stehen so dem Empfänger zur Verfügung. Diese Ausgestaltung ist insbesondere dann vorteilhaft, wenn die empfangenen Daten ohnehin in schriftlicher Form benötigt werden. Durch die Erfindung wird eine dauernde Bereitschaft des Personalcomputers vermieden. Es wird lediglich bei Datenempfang der Drucker eingeschaltet und auf diesem die empfangenen Daten ausgedruckt.

Bevorzugt kann eine Umschalteinrichtung vorhanden sein, welche den Drucker einerseits mit dem Personalcomputer und andererseits mit der Empfangseinrichtung verbindet. Ein Umschalten kann dabei bevorzugt automatisch erfolgen in Abhängigkeit vom Datenempfang von der Empfangseinrichtung bzw. vom Personalcomputer.

Nach einer weiteren Ausgestaltung der Erfindung ist die Empfangseinrichtung mit einem Eingang, insbesondere mit einer genormten Schnittstelle versehen, über welche die Empfangseinrichtung konfigurierbar ist.

Schließlich kann die Empfangseinrichtung eine akustische Wiedergabeeinrichtung enthalten, insbesondere einen Lautsprecher.

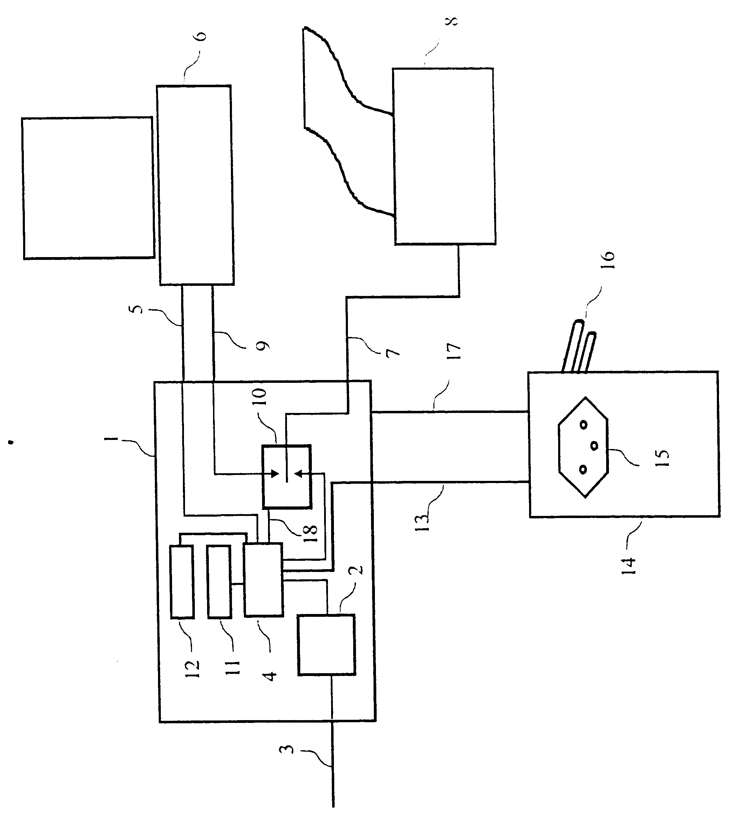

Ein Ausführungsbeispiel der Erfindung ist in der Zeichnung dargestellt und wird nachfolgend beschrieben. Die einzige Figur zeigt eine Schaltungsanordnung einer erfindungsgemäßen Empfangseinrichtung in vereinfachter Darstellung.

Die Empfangseinrichtung 1 weist einen Eingangskreis 2 mit sog. Interface auf, welcher Daten von einer Datenfernleitung 3 erhält und an eine Steuer- und Überwachungseinrichtung 4 weiterleitet. Die Steuer- und Überwachungseinrichtung 4 ist mittels einer Datenleitung 5 mit einem Personalcomputer 6 und über eine Datenleitung 7 mit einem Drucker 8 verbindbar. Der Personalcomputer 6 ist über eine Datenleitung 9 ebenfalls mit dem Drucker 8 verbindbar, wobei ein Umschalter 10 alternativ die Druckerleitung 7 mit der Datenleitung 9 oder mit der Steuer- und Überwachungseinrichtung 4 verbindet. Zur Steuerung des Umschalters 10 ist dieser über eine Steuerleitung 18 mit der Steuer- und Überwachungseinrichtung 4 verbunden.

Desweiteren ist die Steuer- und Überwachungseinrichtung 4 mit einem ersten Speicher 11 und mit einem zweiten Speicher 12 verbunden, wobei der erste Speicher 11 das Programm für die Steuer- und Überwachungseinrichtung 4 enthält, während der zweite Speicher 12 als Schreib-Lesespeicher ausgebildet ist zur Zwischenspeicherung der über die Datenfernleitung 3 empfangenen Daten.

Schließlich ist die Steuer- und Überwachungseinrichtung 4 über eine Steuerleitung 13 mit einem Speisegerät 14 verbunden, welches eine steuerbare Steckdose 15 aufweist. Das Speisegerät 14 ist mittels eines Steckers 16 mit Netzspannung versorgt und enthält einen über die Leitung 13 steuerbaren Schalter, über welchen die Steckdose 15 wahlweise auf das Netz geschaltet werden kann. Die Empfangseinrichtung selbst wird ebenfalls über eine Leitung 17 durch das Speisegerät 14 mit Spannung versorgt.

Erfaßt die Steuer- und Überwachungseinrichtung 4 einen Dateneingang über die Datenfernleitung 3, so wird über die Steuerleitung 13 die Steckdose 15 mit Spannung versorgt. Die Steckdose 15 wiederum dient als Spannungsquelle für den Drucker 8, so daß dieser über die Steckdose 15 eingeschaltet werden kann. Nun können empfangene Daten über die Datenleitung 7 an den Drucker 8 weitergeleitet und dort ausgedruckt werden.

Während der Herstellung der Betriebsbereitschaft des Druckers 8 werden die Daten im Speicher 12 gespeichert und anschließend von der Steuer- und Überwachungseinrichtung 4 ausgelesen und an den Drucker 8 übermittelt. Der Umschalter 10 wird hierzu ebenfalls gesteuert über die Steuer- und Überwachungseinrichtung 4 in die eine Stellung gebracht, in welcher er die Druckerleitung 7 mit der Steuer- und Überwachungseinrichtung 4 verbindet.

Soll vom Personalcomputer 6 ein Ausdruck auf den Drucker 8 vorgenommen werden, so werden die entsprechenden Daten über die Datenleitung 9 und die Druckerleitung 7 auf den Drucker 8 gegeben. Hiezu wird der Umschalter 10 automatisch in seine andere Stellung gebracht, sobald der Personalcomputer 6 versucht, Daten auf die Datenleitung 9 zu senden. Ist der Drucker 8 in einem solchen Moment bereits besetzt, so erhält der Personalcomputer 6 die Mitteilung, dass der Drucker 8 noch nicht ansprechbar ist. Der Drucker 8 wird bei anstehendem Druckauftrag vom Personalcomputer 6 automatisch eingeschaltet, falls er dies noch nicht ist.

Die Datenleitung 5 kann zudem auch dazu verwendet werden, die Steuer- und Überwachungseinrichtung 4 zu konfigurieren. Hierzu kann der Personalcomputer 6 verwendet werden, in welchen die entsprechenden Konfigurationsbefehle eingegeben werden.

Bei der Datenfernleitung 3 kann es sich insbesondere um eine Telefonleitung oder eine ISDN-Leitung handeln, wobei der Eingangskreis 2 ein sogenanntes Interface umfaßt, welches für eine galvanische Trennung der Telefon- bzw. ISDN-Leitung und der Empfangseinrichtung sorgt.

Die Empfangseinrichtung 1 kann gleichzeitig eine Modulations- und Demodulationseinrichtung umfassen, welche digitale Daten auf ein Trägersignal aufmoduliert bzw. aus dem empfangenen modulierten Signal das demodulierte Nutzsignal zurückentwickelt. Die Empfangseinrichtung 1 arbeitet in diesem Fall also als Modem, bzw. als Faxmodem, wobei der Ausdruck jedoch auf einem normalen Personalcomputerdrucker 8 erfolgt, der bei Datenempfang über die Steckdose 15 automatisch eingeschaltet wird.

Die Datenleitung 5 kann schließlich auch dazu dienen, Daten vom Personalcomputer 6 auf die Datenfernleitung 3 zu übertragen, wobei die Empfangseinrichtung 1 durch den Personalcomputer 6 dann in einen Sendemodus umgeschaltet wird.

## Patentansprüche

1. Einrichtung zum Empfang von Daten, welche über eine Datenfernleitung (3) geliefert werden und an ein zugeordnetes Endgerät wie Datenverarbeitungsgerät (6) oder Datenwiedergabegerät (8) weitergeleitet werden sollen, dadurch gekennzeichnet, daß eine Steuer- und Überwachungseinrichtung (4) vorhanden ist, welche das Eingehen von Daten überwacht und bei Dateneingang ein Steuersignal ausgibt, welches das zugeordnete Endgerät (6, 8) in Betriebsbereitschaft versetzt.

2. Einrichtung nach Anspruch 1, dadurch gekennzeichnet, daß durch das Steuersignal der Steuer- und Überwachungseinrichtung bei Datenempfang die Energieversorgung des Endgerätes (6, 8) eingeschaltet wird.

3. Einrichtung nach Anspruch 2, dadurch gekennzeichnet, daß durch das Steuersignal eine zur Speisung des Endgerätes (6, 8) vorgesehene Steckdose (15) eingeschaltet wird.

4. Einrichtung nach einem der Ansprüche 1 bis 3, dadurch gekennzeichnet, daß ein Speicher (12) vorhanden ist, in welchem empfangene Daten bis zur Betriebsbereitschaft des Endgerätes (6, 8) speicherbar sind.

5. Einrichtung nach einem der vorhergenden Ansprüche, dadurch gekennzeichnet, daß eine Einrichtung zur Erkennung der Art der empfangenen Daten vorhanden ist.

6. Einrichtung nach Anspruch 5, dadurch gekennzeichnet, daß entsprechend der ermittelten Datenart ein bestimmtes Endgerät (6, 8) eingeschaltet und an dieses die empfangenen Daten weitergeleitet werden.

7. Einrichtung nach Anspruch 5, dadurch gekennzeichnet, daß die Daten einer der ermittelten Datenart entsprechenden Konvertierung unterzogen werden.

8. Einrichtung nach einem der vorhergehenden Ansprüche, dadurch gekennzeichnet, daß die Einrichtung (1) gleichzeitig als Sendeeinrichtung ausgebildet ist zum Aussenden von Daten über die Datenfernleitung (3).

9. Einrichtung nach einem der vorhergehenden Ansprüche, dadurch gekennzeichnet, daß die Einrichtung (1) ausgebildet ist zum Empfang von Telefaxdaten von einer Telefon- oder ISDN-Leitung.

10. Einrichtung nach einem der vorhergehenden Ansprüche, dadurch gekennzeichnet, daß das Endgerät ein Drucker (8) ist.

11. Einrichtung nach Anspruch 10, dadurch gekennzeichnet, daß das Endgerät ein Drucker (8) ist, der gleichzeitig einem Personalcomputer (6) als Drucker dient.

12. Einrichtung nach Anspruch 11, dadurch gekennzeichnet, daß eine Umschalteinrichtung (10) vorhanden ist zum alternativen Verbinden des Personalcomputers (6) und der Empfangseinrichtung (1) mit dem Drucker (8).

13. Einrichtung nach einem der vorhergehenden Ansprüche, dadurch gekennzeichnet, daß die Empfangseinrichtung (1) über eine Datenleitung (5) von einem Personalcomputer (6) aus konfigurierbar ist.

14. Einrichtung nach einem der vorhergehenden Ansprüche, dadurch gekennzeichnet, daß die Empfangseinrichtung (1) eine akustische Wiedergabeeinrichtung, insbesondere einen Lautsprecher umfaßt.

15. Einrichtung nach einem der vorhergehenden Ansprüche, dadurch gekennzeichnet, daß das Endgerät (6, 8) nach beendetem Datenempfang automatisch wieder ausgeschaltet wird.
